# EUROPEAN PATENT SPECIFICATION

(11) **EP 4 411 610 B1**
(45) Date of publication and mention of the grant of the patent: **04.11.2026**
(21) Application number: 23214292.7
(22) Date of filing: 05.12.2023
(51) Int. Cl.: G06Q 10/06, G08G 5/00, G06N 20/00

(54) **SYSTEM AND METHOD FOR SMART ELECTRIC FLIGHT DISPATCH**
SYSTEM UND VERFAHREN FÜR INTELLIGENTE ELEKTRISCHE FLUGVERTEILUNG
SYSTÈME ET PROCÉDÉ DE RÉPARTITION DE VOL ÉLECTRIQUE INTELLIGENTE

(30) Priority: 02.02.2023 IN 202311006750; 01.09.2023 US 202318241620
(43) Date of publication of application: 07.08.2024
(73) Proprietor: Arinc Incorporated, Annapolis, MD 21401 (US)
(72) Inventor: KUMAR, Avinash Arun, Bangalore (IN); KUMAR, Anmol, Bihar (IN); THEKKANATH, Sreepriya Payyalore, Bangalore (IN)
(74) Representative: Dehns

(56) References cited:
- WO-A1-2021/072420
- US-A1- 2022 227 252
- US-A1- 2023 058 992
- US-B1- 11 417 154

## Description

### CROSS-REFERENCE TO RELATED APPLICATIONS

The present application claims priority to India Provisional Patent Application No. 202311006750, filed February 2, 2023, entitled SYSTEM AND METHOD FOR SMART ELECTRIC FLIGHT DISPATCH, naming Avinash Arun Kumar, Anmol Kumar, and Sreepriya Payyalore Thekkanath as inventors, which is incorporated herein by reference in the entirety.

### TECHNICAL FIELD

The present disclosure relates generally to electric aircraft and, more particularly, to flight dispatch systems and methods for electric aircraft.

### BACKGROUND

Electric aircrafts (e-ACs) will soon be ready to be used commercially. However, e-ACs have limitations in battery management (e.g., charging time and battery life) which makes dispatch of e-ACs more difficult to manage. As such, there is a need for a system and method to help airline companies organize their e-AC fleet.
US 11417154 B1 describes a system for electric aircraft fleet management for at least an electric aircraft. the system includes a computing device communicatively connected to at least an electric aircraft.
US 2022/227252 A1 describes systems and methods for dynamically selecting a control policy from among several available control policies for controlling an energy system having multiple controllable assets.

### SUMMARY

In accordance with a first aspect of the invention, there is provided a system for e-AC flight dispatch as recited in claim 1.

In some embodiments, the airline information data may include at least one of number of electric aircraft in a fleet of the airline, range of a flight for the electric aircraft, departure time for the electric aircraft, or arrival time for the electric aircraft.

In some embodiments, the airport infrastructure data may include at least one of a number of charging stations, nominal power of charge at a charging station, amount of time needed to board the electric aircraft, amount of time needed to de-board the electric aircraft, time period needed to swap one or more batteries of the electric aircraft, or number of fully charged batteries in stock.

In some embodiments, the battery management data may include at least one of a minimum charge needed to complete a range of flight for the electric aircraft, state of charge, battery safety margin, time period for battery charging, or number of batteries on-board the electric aircraft.

In accordance with another aspect of the invention, there is provided a method for e-AC flight dispatch as recited in claim 5.

In some embodiments, the airline information data may include at least one of number of electric aircraft in a fleet of the airline, range of a flight for the electric aircraft, departure time for the electric aircraft, or arrival time for the electric aircraft.

In some embodiments, the airport infrastructure data may include at least one of a number of charging stations, nominal power of charge at a charging station, amount of time needed to board the electric aircraft, amount of time needed to de-board the electric aircraft, time period needed to swap one or more batteries of the electric aircraft, or number of fully charged batteries in stock.

In some embodiments, the battery management data may include at least one of a minimum charge needed to complete a range of flight for the electric aircraft, state of charge, battery safety margin, time period for battery charging, or number of batteries on-board the electric aircraft.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a simplified block diagram of a system for smart electric flight dispatch, in accordance with one or more embodiments of the present disclosure.
FIG. 2A illustrates a simplified block diagram of the system coupled to a plurality of e-ACs, in accordance with one or more embodiments of the present disclosure.
FIG. 2B illustrates a simplified block diagram of the plurality of e-ACs, in accordance with one or more embodiments of the present disclosure.
FIG. 3 illustrates a simplified block diagram of a electric flight dispatch module of the system, in accordance with one or more embodiments of the present disclosure.
FIG. 4 illustrates a flow chart depicting a method or process for smart electric flight dispatch, in accordance with one or more embodiments of the present disclosure.
FIG. 5 illustrates an exemplary graphic user interface of the system, in accordance with one or more embodiments of the present disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one," "one or more," or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

Electric aircrafts (e-ACs) will soon be ready to be used commercially. However, e-ACs have limitations in battery management (e.g., charging time and battery life) which makes dispatch of e-ACs more difficult to manage. As such, there is a need for a system and method to help airline companies organize their e-AC fleet.

As such, it would be desirable to provide a system and method configured to address one or more shortcomings of the previous approaches. The system and method should help airline companies organize their e-AC fleet, such that the turn around time on the ground may be reduced (e.g., re-charging the fleet, performing maintenance, and the like). For example, the system and method may be configured to generate individualized e-AC flight dispatch data based on a real-time data (e.g., airline information, airport infrastructure data, battery management data, and the like).

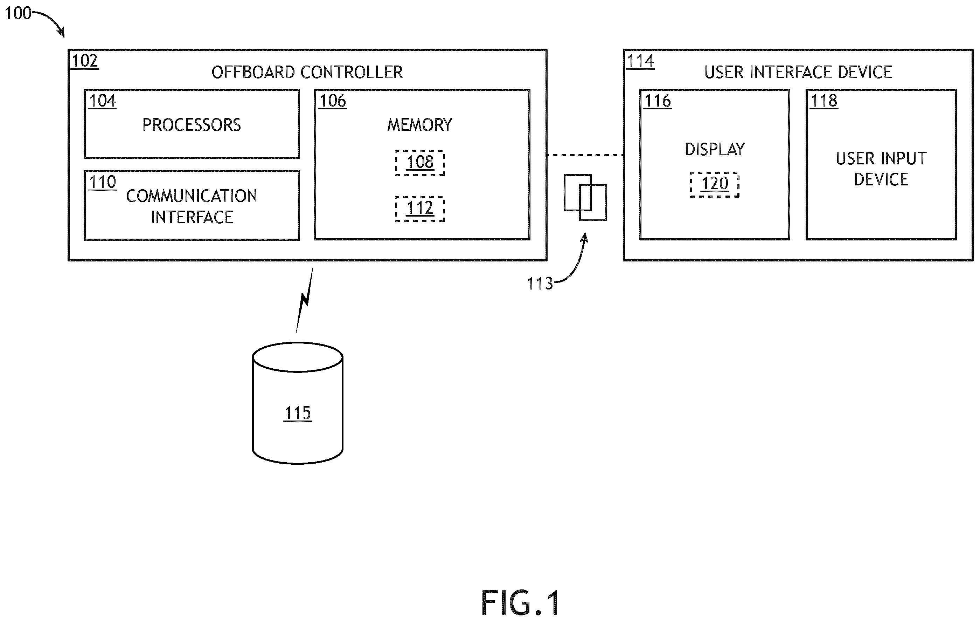

FIGS. 1-5 in general illustrate a system and method for smart electric flight dispatch, in accordance with one or more embodiments of the disclosure.

FIG. 1 illustrates a simplified block diagram of a smart electric flight dispatch system 100, in accordance with one or more embodiments of the disclosure. For purposes of the present disclosure, the terms "smart electric flight dispatch system 100", "electric flight dispatch system 100", "flight dispatch system 100", "system 100", and variations thereof may be considered equivalent, unless otherwise noted herein.

Referring now to FIG. 1, the system 100 may include a controller 102 (e.g., an offboard aircraft controller). The controller 102 may include one or more processors 104, memory 106 configured to store one or more program instructions 108, and/or one or more communication interfaces 110.

The system 100 may further include an electric flight dispatch module 112 stored in memory 106 on the controller 102. The electric flight dispatch module 112 may include a machine learning-based algorithm/module 112. For example, the one or more processors 104 may be configured to generate electric flight dispatch output data 113 using the machine learning-based algorithm/module of the electric flight dispatch module 112, which will be discussed further herein.

For purposes of the present disclosure, the terms "electric flight dispatch module 112", "flight dispatch module 112", "module 112", and variations thereof may be considered equivalent, unless otherwise noted herein. Additionally, for purposes of the present disclosure, the terms "electric flight dispatch output data 113", "flight dispatch output data 113", "output data 113", and variations thereof may be considered equivalent, unless otherwise noted herein.

The system 100 may include a user interface device 114. The user interface device 114 may include a display 116 and a user input device 118. The controller 102 may be coupled (e.g., physically, electrically, and/or communicatively) to one or more user input devices 114. The one or more display devices 116 may be coupled to the one or more user input devices 118. For example, the one or more display devices 116 may be coupled to the one or more user input devices 118 by a transmission medium that may include wireline and/or wireless portions. The one or more display devices 116 may include and/or be configured to interact with one or more user input devices 118.

The one or more display devices 116 and the one or more user input devices 118 may be standalone components within the system 100. It is noted herein, however, that the one or more display devices 116 and the one or more user input devices 118 may be integrated within one or more common user interfaces 114.

The user interface device 114 may be configured to display graphic user interface (GUI) 120 generated based on the output data 113. For example, the controller 102 may be configured to generate one or more control signals configured to cause the display 114 to display the GUI 120 generated based on the output data 113.

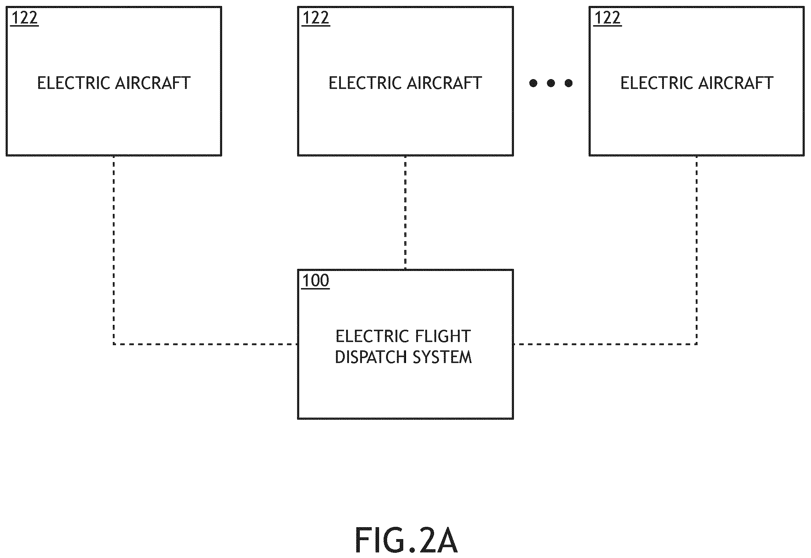

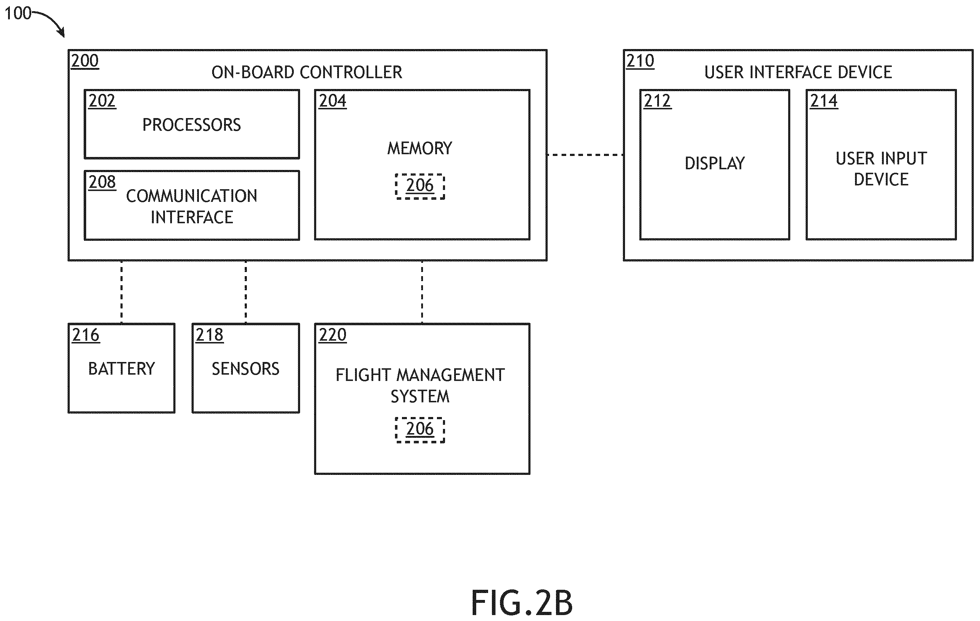

FIG. 2A illustrates a simplified block diagram of a plurality of electric aircrafts 122 communicatively coupled to the smart electric flight dispatch system 100, in accordance with one or more embodiments of the present disclosure. FIG. 2B illustrates a simplified block diagram of an e-AC 122 of the plurality of e-ACs 122, in accordance with one or more embodiments of the present disclosure.

Referring to FIG. 2A, the system 100 may be communicatively coupled to a plurality of electric aircrafts (e-ACs) 122. For example, the offboard controller 102 may be communicatively coupled to and configured to receive data from the plurality of e-ACs 122.

It is noted herein that the system 100 may be communicatively coupled to any number of e-ACs. FIG. 2B is provided merely for illustrative purposes and shall not be construed as limiting the scope of the present disclosure.

Referring to FIG. 2B, each aircraft 122 may include an aircraft controller 200 (e.g., on-board aircraft controller). The aircraft controller 200 may include one or more processors 202, memory 204 configured to store one or more program instructions 206, one or more communication interfaces 208, and the like.

The aircraft controller 200 of the aircraft 122 may be coupled (e.g., physically, electrically, and/or communicatively) to the one or more offboard controllers 102 of the system 100.

The aircraft controller 200 may be coupled (e.g., physically, electrically, and/or communicatively) to one or more user input devices 210. The one or more display devices 210 may be coupled to the one or more user input devices 214. For example, the one or more display devices 212 may be coupled to the one or more user input devices 214 by a transmission medium that may include wireline and/or wireless portions. The one or more display devices 212 may include and/or be configured to interact with one or more user input devices 214.

The one or more display devices 212 and the one or more user input devices 214 may be standalone components within the aircraft 122. It is noted herein, however, that the one or more display devices 112 and the one or more user input devices 114 may be integrated within one or more common user interfaces 210.

The aircraft controller 200 may be coupled (e.g., physically, electrically, and/or communicatively) to and configured to receive data from one or more aircraft batteries 216. For example, the received data from the one or more aircraft batteries 216 may include, but is not limited to, battery status/health (e.g., battery charge level, remaining battery charge, and the like), number of batteries on-board the e-AC, active battery time, and the like.

The aircraft controller 200 may be coupled (e.g., physically, electrically, and/or communicatively) to and configured to receive data from one or more aircraft sensors 218. The one or more aircraft sensors 218 may be configured to sense a particular condition(s) external or internal to the aircraft 122 and/or within the aircraft 122. The one or more aircraft sensors 218 may be configured to output data associated with particular sensed condition(s) to one or more components/systems onboard the aircraft 122. Generally, the one or more aircraft sensors 218 may include, but are not limited to, one or more inertial measurement units, one or more airspeed sensors, one or more radio altimeters, one or more flight dynamic sensors (e.g., sensors configured to sense pitch, bank, roll, heading, and/or yaw), one or more weather radars, one or more air temperature sensors, one or more surveillance sensors, one or more air pressure sensors, one or more engine sensors, and/or one or more optical sensors (e.g., one or more cameras configured to acquire images in an electromagnetic spectrum range including, but not limited to, the visible light spectrum range, the infrared spectrum range, the ultraviolet spectrum range, or any other spectrum range known in the art).

The aircraft controller 200 may be coupled (e.g., physically, electrically, and/or communicatively) to and configured to receive data from one or more flight management systems (FMS) 220. The one or more flight management systems 220 may include one or more navigational systems 221. The one or more navigational systems 221 may be coupled (e.g., physically, electrically, and/or communicatively) to and in communication with one or more GPS satellites, which may provide vehicular location data (e.g., aircraft location data) to one or more components/systems of the aircraft 122 and system 100. For example, the one or more navigational systems 221 may be implemented as a global navigation satellite system (GNSS) device, and the one or more GPS satellites may be implemented as GNSS satellites. The one or more navigational systems 221 may include a GPS receiver and a processor. For example, the one or more navigational systems 221 may receive or calculate location data from a sufficient number (e.g., at least four) of GPS satellites in view of the aircraft 122 such that a GPS solution may be calculated.

It is noted herein the one or more aircraft sensors 218 may operate as a navigation device 221, being configured to sense any of various flight conditions or aircraft conditions typically used by aircraft and output navigation data (e.g., aircraft location data, aircraft orientation data, aircraft direction data, aircraft speed data, and/or aircraft acceleration data). For example, the various flight conditions or aircraft conditions may include altitude, aircraft location (e.g., relative to the earth), aircraft orientation (e.g., relative to the earth), aircraft speed, aircraft acceleration, aircraft trajectory, aircraft pitch, aircraft bank, aircraft roll, aircraft yaw, aircraft heading, air temperature, and/or air pressure. By way of another example, the one or more aircraft sensors 218 may provide aircraft location data and aircraft orientation data, respectively, to the one or more processors 104, 202.

The aircraft controller 200 and/or the one or more offboard controllers 102 may be coupled (e.g., physically, electrically, and/or communicatively) to one or more satellites. For example, the aircraft controller 200 and/or the one or more offboard controllers 102 may be coupled (e.g., physically, electrically, and/or communicatively) to one another via the one or more satellites. For instance, at least one component of the aircraft controller 200 may be configured to transmit data to and/or receive data from at least one component of the one or more offboard controllers 102, and vice versa.

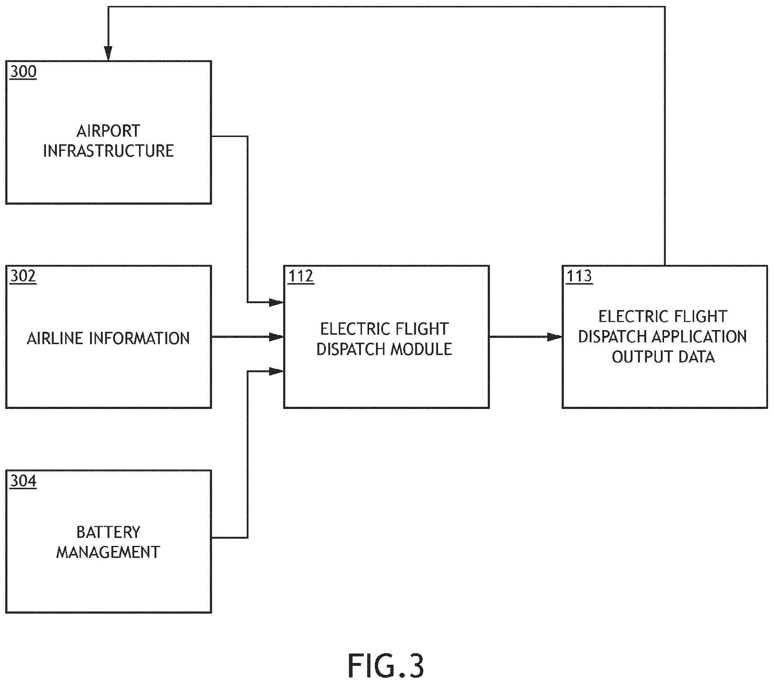

FIG. 3 illustrates a simplified block diagram of the electric flight dispatch module 112, in accordance with one or more embodiments of the present disclosure.

The system 100 may include the electric flight dispatch module 112 configured to generate the output data 113, such that an action plan for ground crew may be generated based on the generated output data 113. For example, the one or more controllers 102 may include the flight dispatch module 112 stored in memory 106. For instance, the one or more controllers 102 may be configured to generate the action plan for ground crew based on the generated output data 113 from the flight dispatch module 112.

As previously discussed herein, the flight dispatch module 112 may include a machine learning algorithm/module. In generating the machine learning algorithm/module, the one or more controllers 102 may be configured to acquire training data to train the machine learning algorithm/module 112. For example, the one or more controllers 102 may be configured to acquire training data from a database 115. The database 115 may store data in real-time. The data may include, but is not limited to, airline data, airport infrastructure data, battery management data, aircraft data, and the like. For the purposes of the present disclosure, the term "training data" may be regarded as data that will be used as inputs to train the machine learning algorithm/module.

The one or more controllers 102 may be configured to generate the machine learning algorithm/module via any technique known in the art including, but not limited to, supervised learning, unsupervised learning, and the like.

It is further noted herein that the machine learning algorithm/module may include any type of machine learning algorithm/classifier and/or deep learning technique or classifier known in the art including, but not limited to, a random forest classifier, a support vector machine (SVM) classifier, an ensemble learning classifier, an artificial neural network (ANN), and the like. By way of another example, the machine learning classifier may include a deep convolutional neural network. For instance, in some embodiments, the machine learning classifier may include ALEXNET and/or GOOGLENET. In this regard, the machine learning classifier may include any algorithm, classifier, or predictive model configured to generate real-time dispatch output data 113 based on received real-time data.

The module 112 may be configured to receive one or more sets of real-time data. For example, the one or more sets of real-time data may include airport infrastructure data 300. For instance, the airport infrastructure data 300 may include, but is not limited to, number of charging stations, nominal power of charge at a battery charging station, amount of time needed to board passengers, amount of time needed to de-board passengers, time period needed to swap batteries, number of fully charged batteries in stock, and the like. By way of another example, the one or more sets of real-time data may include airline information data 302. For instance, the airline information data 302 may include, but is not limited to, number of e-AC in the fleet, range of the flight/mission, departure time, arrival time, and the like. By way of another example, the one or more sets of real-time data may include battery management data 304. For instance, the battery management data 304 may include, but is not limited to, minimum charge needed to complete the range of flight (or mission), state of charge (pre-flight, post-flight, and the like), battery safety margin, time period for battery charging, number of batteries on-board the e-AC, and the like.

In a non-limiting example, the battery safety margin may include a safety margin of approximately 25 percent charge (i.e., meaning that the aircraft may be dispatched for a range that requires 75 percent of charge). In this regard, the safety margin may be used for emergency go-around and holding for landing clearance. It is noted that the safety margin may include any percent of charge needed for emergency go-around and holding for landing clearance, as such the above example is provided merely for illustrative purposes.

In some embodiments, the one or more sets of real-time data may be received from a user via the user interface device 114. For example, the controller 102 may be configured to receive one or more sets of real-time data from the user interface device 114. In this regard, a user may input one or more sets of real-time data using the user input device 118 of the user interface device 114. For purposes of the present disclosure, a "user" may include a crew member, airline staff member, pilot, airport staff member, maintenance crew member, or the like.

In a non-limiting example, a user may input the state of charge of the on-board batteries. In one instance, the user may input the state of charge of the on-board batteries prior to flight (e.g., pre-flight). In another instance, the user may input the state of charge of the on-board batteries after flight (e.g., post-flight).

In an additional non-limiting example, a user may input a battery swap time (e.g., time it takes/took to swap out one or more batteries).

In an additional non-limiting example, a user may input the number of batteries on-board the e-AC.

In an additional non-limiting example, a user may input an amount of time needed to board (or de-board) passengers.

In some embodiments, the one or more sets of real-time data may be received automatically from one or more components of the system or aircraft. For example, the controller 102 may be configured to receive one or more sets of real-time data from the aircraft controller 200 of the aircraft 122.

In a non-limiting example, the controller 102 may be configured to receive a state of charge of the on-board batteries (e.g., pre-flight or post-flight) from the aircraft controller 200 of the aircraft.

In an additional non-limiting example, the controller 102 may be configured to receive a number of on-board batteries from the aircraft controller 200 of the aircraft.

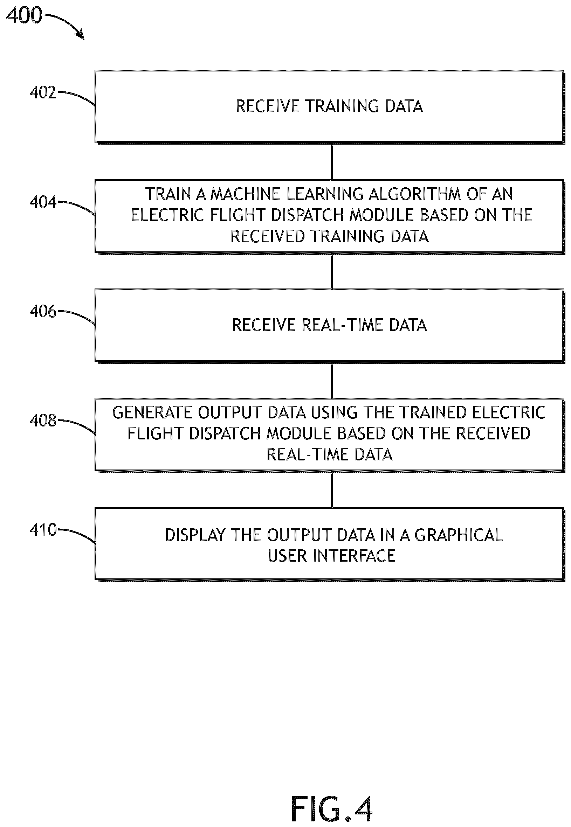

FIG. 4 illustrates a flow chart depicting a method or process 400 for smart electric flight dispatch, in accordance with one or more embodiments of the present disclosure.

In a step 402, the system 100 may be configured to receive a set of training data. For example, the one or more controllers 102 (including the module 112) may be configured to receive the set of training data. For instance, the one or more controllers 102 may be configured to receive a set of training data (e.g., airline data, airport infrastructure data, battery management data, aircraft data, and the like) to train the machine learning algorithm/module.

In a step 404, the system 100 may be configured to train the machine learning algorithm of the electric flight dispatch module 112. For example, the system 100 may be configured to train the machine learning algorithm of the electric flight dispatch module 112 based on the received set of training data prior, such that the electric flight dispatch module 112 is at least partially pre-trained. By way of another example, the system 100 may be configured to train the machine learning algorithm of the electric flight dispatch module 112 based on a set of real-time training data prior, such that the electric flight dispatch module 112 is trained during execution and in real-time (or near real-time).

In a step 406, the system 100 may be configured to receive one or more sets of real-time data. For example, the one or more controllers 102 (including the module 112) may be configured to receive the one or more sets of real-time data (e.g., airline data 302, airport infrastructure data 300, battery management data 304, aircraft data, and the like) from the user interface device 114. In one instance, a user may input the state of charge of the on-board batteries (e.g., pre-flight or post-flight). In another instance, a user may input a battery swap time (e.g., time it takes/took to swap out one or more batteries). In another instance, a user may input the number of batteries on-board the e-AC. In another instance, a user may input an amount of time needed to board (or de-board) passengers. By way of another example, the one or more controllers 102 (including the module 112) may be configured to receive the one or more sets of real-time data (e.g., airline data 302, airport infrastructure data 300, battery management data 304, aircraft data, and the like) from the aircraft controller 200. In one instance, the controller 102 may be configured to receive a state of charge of the on-board batteries (e.g., pre-flight or post-flight) from the aircraft controller 200 of the aircraft. In another instance, the controller 102 may be configured to receive a number of on-board batteries from the aircraft controller 200 of the aircraft.

In a step 408, the system 100 may be configured to generate output data 113. For example, the one or more controllers 102, using the module 112, may be configured to generate a set of output data 113 based on the received real-time data.

In a step 410, the system 100 may be configured to generate one or more control signals configured to cause the user interface device 114 to display a graphical user interface. For example, the display 116 of the user interface 114 may be configured to display the GUI 120 based on the generated output data 113. In this regard, the GUI 120 includes an action plan/checklist for ground crew to follow when dispatching a specified e-AC.

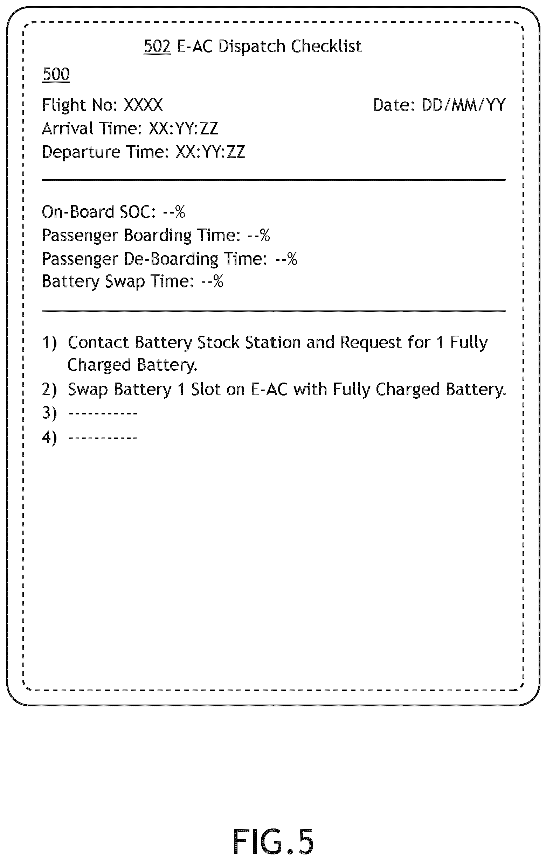

FIG. 5 illustrates an exemplary GUI 500, in accordance with one or more embodiments of the present disclosure.

The GUI 500 is configured to display an e-AC dispatch checklist 502. In a non-limiting example, the e-AC dispatch checklist 502 may include, but is not limited to, flight number, arrival time, departure time, date, on-board state of charge (SOC), passenger boarding time, passenger de-boarding time, battery swap time, one or more instructions, and the like.

In a non-limiting example, the one or more instructions may include a "contact battery stock station and request for 1 fully charged battery" instruction. In this example, the checklist 502 may indicate to the user that they need to request a fully charged battery.

Continuing with the above example, the one or more instructions may further include a "swap battery 1 slot on e-AC with fully charged battery" instruction. In this example, the checklist 502 may indicate to the user that they need to perform a battery swap for the battery in slot 1 using the request fully charged battery.

Referring again to FIGS. 1 and 2B, the one or more processors may include any one or more processing elements, micro-controllers, circuitry, field programmable gate array (FPGA) or other processing systems, and resident or external memory for storing data, executable code, and other information accessed or generated by the aircraft controller and/or the one or more offboard controllers. In this sense, the one or more processors may include any microprocessor device configured to execute algorithms and/or program instructions. It is noted herein, however, that the one or more processors are not limited by the materials from which it is formed or the processing mechanisms employed therein and, as such, may be implemented via semiconductor(s) and/or transistors (e.g., using electronic integrated circuit (IC) components), and so forth. In general, the term "processor" may be broadly defined to encompass any device having one or more processing elements, which execute a set of program instructions from a non-transitory memory medium (e.g., the memory), where the set of program instructions is configured to cause the one or more processors to carry out any of one or more process steps.

The memory may include any storage medium known in the art suitable for storing the set of program instructions executable by the associated one or more processors. For example, the memory may include a non-transitory memory medium. For instance, the memory may include, but is not limited to, a read-only memory (ROM), a random access memory (RAM), a magnetic or optical memory device (e.g., disk), a magnetic tape, a solid state drive, flash memory (e.g., a secure digital (SD) memory card, a mini-SD memory card, and/or a micro-SD memory card), universal serial bus (USB) memory devices, and the like. The memory may be configured to provide display information to the display device (e.g., the one or more display devices). In addition, the memory may be configured to store user input information from a user input device of a user interface. The memory may be housed in a common controller housing with the one or more processors. The memory may, alternatively or in addition, be located remotely with respect to the spatial location of the processors and/or a controller. For instance, the one or more processors and/or the controller may access a remote memory (e.g., server), accessible through a network (e.g., internet, intranet, and the like).

The aircraft controller and/or the one or more offboard controllers may be configured to perform one or more process steps, as defined by the one or more sets of program instructions. The one or more process steps may be performed iteratively, concurrently, and/or sequentially. The one or more sets of program instructions 108, 130 may be configured to operate via a control algorithm, a neural network (e.g., with states represented as nodes and hidden nodes and transitioning between them until an output is reached via branch metrics), a kernel-based classification method, a Support Vector Machine (SVM) approach, canonical-correlation analysis (CCA), factor analysis, flexible discriminant analysis (FDA), principal component analysis (PCA), multidimensional scaling (MDS), principal component regression (PCR), projection pursuit, data mining, prediction-making, exploratory data analysis, supervised learning analysis, boolean logic (e.g., resulting in an output of a complete truth or complete false value), fuzzy logic (e.g., resulting in an output of one or more partial truth values instead of a complete truth or complete false value), or the like. For example, in the case of a control algorithm, the one or more sets of program instructions may be configured to operate via proportional control, feedback control, feedforward control, integral control, proportional-derivative (PD) control, proportional-integral (PI) control, proportional-integral-derivative (PID) control, or the like.

The one or more communication interfaces may be operatively configured to communicate with one or more components of the aircraft controller and/or the one or more offboard controllers. For example, the one or more communication interfaces may also be coupled (e.g., physically, electrically, and/or communicatively) with the one or more processors to facilitate data transfer between components of the one or more components of the aircraft controller and/or the one or more offboard controllers and the one or more processors. For instance, the one or more communication interfaces may be configured to retrieve data from the one or more processors, or other devices, transmit data for storage in the memory, retrieve data from storage in the memory, or the like. By way of another example, the aircraft controller and/or the one or more offboard controllers may be configured to receive and/or acquire data or information from other systems or tools by a transmission medium that may include wireline and/or wireless portions. By way of another example, the aircraft controller and/or the one or more offboard controllers may be configured to transmit data or information (e.g., the output of one or more procedures of the inventive concepts disclosed herein) to one or more systems or tools by a transmission medium that may include wireline and/or wireless portions (e.g., a transmitter, receiver, transceiver, physical connection interface, or any combination). In this regard, the transmission medium may serve as a data link between the aircraft controller 200 and/or the one or more offboard controllers and the other subsystems (e.g., of the aircraft 122 and/or the system 100). In addition, the aircraft controller and/or the one or more offboard controllers may be configured to send data to external systems via a transmission medium (e.g., network connection).

The one or more display devices may include any display device known in the art. For example, the display devices may include, but are not limited to, a liquid crystal display (LCD), a light-emitting diode (LED) based display, an organic light-emitting diode (OLED) based display, an electroluminescent display (ELD), an electronic paper (E-ink) display, a plasma display panel (PDP), a display light processing (DLP) display, or the like. Those skilled in the art should recognize that a variety of display devices may be suitable for implementation in the present invention and the particular choice of display device may depend on a variety of factors, including, but not limited to, form factor, cost, and the like. In a general sense, any display device capable of integration with the user input device (e.g., touchscreen, bezel mounted interface, keyboard, mouse, trackpad, and the like) is suitable for implementation in the present invention.

The one or more user input devices may include any user input device known in the art. For example, the user input device may include, but is not limited to, a keyboard, a keypad, a touchscreen, a lever, a knob, a scroll wheel, a track ball, a switch, a dial, a sliding bar, a scroll bar, a slide, a handle, a touch pad, a paddle, a steering wheel, a joystick, a bezel input device, or the like. In the case of a touchscreen interface, those skilled in the art should recognize that a large number of touchscreen interfaces may be suitable for implementation in the present invention. For instance, the display device may be integrated with a touchscreen interface, such as, but not limited to, a capacitive touchscreen, a resistive touchscreen, a surface acoustic based touchscreen, an infrared based touchscreen, or the like. In a general sense, any touchscreen interface capable of integration with the display portion of a display device is suitable for implementation in the present invention. In another embodiment, the user input device may include, but is not limited to, a bezel mounted interface.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A system (100), the system comprising:
one or more processors (104) configured to execute a set of program instructions (108) stored in memory, the set of program instructions configured to cause the one or more processors to:
receive a set of training data;
train a machine learning algorithm of an electric flight dispatch module (112) based on the received set of training data;
receive one or more sets of real-time data, the one or more sets of real-time data including at least one of airport infrastructure data (300), airline information data (302), or battery management data (304); and
generate a set of output data (113) for dispatching an electric aircraft (122) using the trained machine learning algorithm of the electric flight dispatch module based on received real-time data,
a user interface device (114) including a display (116) and a user input device (108),
wherein the set of program instructions (108) is further configured to cause the one or more processors (104) to:
generate one or more control signals configured to cause the display (212) of the user interface device (114) to display a graphic user interface (120) including the generated set of output data (113), and
wherein the graphical user interface (120) includes an action plan, based on the generated output data, for ground crew to follow when dispatching a specified electric aircraft (122).

2. The system (100) of claim 1, wherein the airline information data (302) includes at least one of:
a number of electric aircraft (122) in a fleet of the airline, a range of a flight for the electric aircraft, a departure time for the electric aircraft, or an arrival time for the electric aircraft.

3. The system (100) of claim 1 or 2, wherein the airport infrastructure data (300) includes at least one of:
a number of charging stations, a nominal power of charge at a charging station, amount of time needed to board the electric aircraft (122), an amount of time needed to de-board the electric aircraft, a time period needed to swap one or more batteries of the electric aircraft, or a number of fully charged batteries in stock.

4. The system (100) of claim 1, 2, or 3, wherein the battery management data (304) includes at least one of:
a minimum charge needed to complete a range of flight for the electric aircraft (122), a state of charge, a battery safety margin, a time period for battery charging, or a number of batteries on-board the electric aircraft.

5. A method (400), the method comprising:
receiving a set of training data;
training a machine learning algorithm of an electric flight dispatch module (112) based on the received set of training data;
receiving one or more sets of real-time data, the one or more sets of real-time data including at least one of airport infrastructure data (300), airline information data (302), or battery management data (304);
generating a set of output data (113) for dispatching an electric aircraft (122) using the trained machine learning algorithm of the electric flight dispatch module based on the received real-time data; and
generate one or more control signals configured to cause a display (212) of a user interface device (114) to display a graphic user interface (120) including the generated set of output data (113),
wherein the graphical user interface (120) includes an action plan, based on the generated output data, for ground crew to follow when dispatching a specified electric aircraft (122).

6. The method (400) of claim 5, wherein the airline information data (302) includes at least one of:
number of electric aircraft (122) in a fleet of the airline, range of a flight for the electric aircraft, departure time for the electric aircraft, or arrival time for the electric aircraft.

7. The method (400) of claim 5 or 6, wherein the airport infrastructure data (300) includes at least one of:
number of charging stations, nominal power of charge at a charging station, amount of time needed to board the electric aircraft (122), amount of time needed to de-board the electric aircraft, time period needed to swap one or more batteries of the electric aircraft, or number of fully charged batteries in stock.

8. The method (400) of any of claims 5, 6, or 7, wherein the battery management data (304) includes at least one of:
minimum charge needed to complete a range of flight for the electric aircraft (122), state of charge, battery safety margin, time period for battery charging, or number of batteries on-board the electric aircraft.

## Patentansprüche

1. System (100), wobei das System Folgendes umfasst:
einen oder mehrere Prozessoren (104), die konfiguriert sind, um einen in einem Speicher gespeicherten Satz von Anweisungen (108) auszuführen, wobei der Satz von Anweisungen konfiguriert ist, um den einen oder die mehreren Prozessoren dazu zu veranlassen:
einen Satz von Trainingsdaten zu empfangen;
einen Maschinenlernalgorithmus eines elektrischen Flugverteilungsmoduls (112) basierend auf dem empfangenen Satz von Trainingsdaten zu trainieren;
einen oder mehrere Sätze von Echtzeitdaten zu empfangen, wobei der eine oder die mehreren Sätze von Echtzeitdaten mindestens eines von Flughafeninfrastrukturdaten (300), Fluggesellschaftsinformationsdaten (302) oder Batterieverwaltungsdaten (304) beinhalten; und
einen Satz von Ausgabedaten (113) für die Verteilung eines elektrischen Luftfahrzeugs (122) unter Verwendung des trainierten Maschinenlernalgorithmus des elektrischen Flugverteilungsmoduls basierend auf den empfangenen Echtzeitdaten zu generieren,
eine Benutzerschnittstellenvorrichtung (114), die eine Anzeige (116) und eine Benutzereingabevorrichtung (108) beinhaltet, wobei der Satz von Anweisungen (108) ferner konfiguriert ist, um zu veranlassen, dass der eine oder die mehreren Prozessoren (104):
ein oder mehrere Steuersignale generieren, die konfiguriert sind, um die Anzeige (212) der Benutzerschnittstellenvorrichtung (114) zu veranlassen, eine grafische Benutzerschnittstelle (120) einschließlich des generierten Satzes von Ausgabedaten (113) anzuzeigen, und
wobei die grafische Benutzerschnittstelle (120) einen auf den generierten Ausgabedaten basierenden Aktionsplan für Bodenpersonal beinhaltet, der beim Verteilen eines spezifischen elektrischen Luftfahrzeugs (122) zu befolgen ist.

2. System (100) nach Anspruch 1, wobei die Fluglinieninformationsdaten (302) mindestens eines von Folgenden beinhalten:
eine Anzahl von elektrischen Luftfahrzeugen (122) in einer Flotte der Fluggesellschaft, eine Reichweite eines Fluges für das elektrische Luftfahrzeug, eine Abflugzeit für das elektrische Luftfahrzeug oder eine Ankunftszeit für das elektrische Luftfahrzeug.

3. System (100) nach Anspruch 1 oder 2, wobei die Flughafeninfrastrukturdaten (300) mindestens eines von Folgenden beinhalten:
eine Anzahl von Ladestationen, eine Nennladeleistung an einer Ladestation, einen Zeitraum, der zum Einsteigen in das elektrische Luftfahrzeug (122) benötigt wird, einen Zeitraum, der zum Aussteigen aus dem elektrischen Luftfahrzeug benötigt wird, einen Zeitraum, der zum Austauschen einer oder mehrerer Batterien des elektrischen Luftfahrzeugs benötigt wird, oder eine Anzahl von vorrätigen, vollständig geladenen Batterien.

4. System (100) nach Anspruch 1, 2 oder 3, wobei die Batterieverwaltungsdaten (304) mindestens eines von Folgenden beinhalten:
eine Mindestladung, die zum Absolvieren einer Flugstrecke erforderlich ist, für das elektrische Luftfahrzeug (122), einen Ladezustand, eine Batteriesicherheitsmarge, eine Zeitspanne für das Laden der Batterie oder eine Anzahl von Batterien an Bord des elektrischen Luftfahrzeugs.

5. Verfahren (400), wobei das Verfahren Folgendes umfasst:
Empfangen eines Satzes von Trainingsdaten;
Trainieren eines Maschinenlernalgorithmus eines elektrischen Flugverteilungsmoduls (112) basierend auf dem empfangenen Satz von Trainingsdaten;
Empfangen eines oder mehrerer Sätze von Echtzeitdaten, wobei der eine oder die mehreren Sätze von Echtzeitdaten mindestens eines von Flughafeninfrastrukturdaten (300), Fluggesellschaftsinformationsdaten (302) oder Batterieverwaltungsdaten (304) beinhalten;
Generieren eines Satzes von Ausgabedaten (113) für die Verteilung eines elektrischen Luftfahrzeugs (122) unter Verwendung des trainierten Maschinenlernalgorithmus des elektrischen Flugverteilungsmoduls basierend auf den empfangenen Echtzeitdaten; und
Generieren eines oder mehrerer Steuersignale, die konfiguriert sind, um eine Anzeige (212) einer Benutzerschnittstellenvorrichtung (114) zu veranlassen, eine grafische Benutzerschnittstelle (120) einschließlich des generierten Satzes von Ausgabedaten (113) anzuzeigen,
wobei die grafische Benutzerschnittstelle (120) einen auf den generierten Ausgabedaten basierenden Aktionsplan für Bodenpersonal beinhaltet, der beim Verteilen eines spezifischen elektrischen Luftfahrzeugs (122) zu befolgen ist.

6. Verfahren (400) nach Anspruch 5, wobei die Fluglinieninformationsdaten (302) mindestens eines von Folgenden beinhalten:
Anzahl von elektrischen Luftfahrzeugen (122) in der Flotte der Fluggesellschaft, Reichweite eines Fluges für das elektrische Luftfahrzeug, Abflugzeit für das elektrische Luftfahrzeug oder Ankunftszeit für das elektrische Luftfahrzeug.

7. Verfahren (400) nach Anspruch 5 oder 6, wobei die Flughafeninfrastrukturdaten (300) mindestens eines von Folgenden beinhalten:
Anzahl von Ladestationen, Nennladeleistung an einer Ladestation, Zeitraum, der zum Einsteigen in das elektrische Luftfahrzeug (122) benötigt wird, Zeitraum, der zum Aussteigen aus dem elektrischen Luftfahrzeug benötigt wird, Zeitraum, der zum Austauschen einer oder mehrerer Batterien des elektrischen Luftfahrzeugs benötigt wird, oder Anzahl von vorrätigen, vollständig geladenen Batterien.

8. Verfahren (400) nach Anspruch 5, 6 oder 7, wobei die Batterieverwaltungsdaten (304) mindestens eines von Folgenden beinhalten:
Mindestladung, die zum Absolvieren einer Flugstrecke erforderlich ist, für das elektrische Luftfahrzeug (122), Ladezustand, Batteriesicherheitsmarge, Zeitspanne für das Laden der Batterie oder Anzahl von Batterien an Bord des elektrischen Luftfahrzeugs.

## Revendications

1. Système (100), le système comprenant :
un ou plusieurs processeurs (104) configurés pour exécuter un ensemble d'instructions de programme (108) stockées dans une mémoire, l'ensemble d'instructions de programme étant configuré pour amener les un ou plusieurs processeurs à :
recevoir un ensemble de données d'entraînement ;
entraîner un algorithme d'apprentissage automatique d'un module de répartition de vol électrique (112) sur la base de l'ensemble de données d'entraînement reçu ;
recevoir un ou plusieurs ensembles de données en temps réel, les un ou plusieurs ensembles de données en temps réel comportant au moins l'une parmi des données d'infrastructure aéroportuaire (300), des données d'information de compagnie aérienne (302) ou des données de gestion de batterie (304) ; et
générer un ensemble de données de sortie (113) pour la répartition d'un aéronef électrique (122) à l'aide de l'algorithme d'apprentissage automatique entraîné du module de répartition de vol électrique sur la base de données en temps réel reçues,
un dispositif d'interface utilisateur (114) comportant un affichage (116) et un dispositif d'entrée utilisateur (108),
dans lequel l'ensemble d'instructions de programme (108) est en outre configuré pour amener les un ou plusieurs processeurs (104) à :
générer un ou plusieurs signaux de commande configurés pour amener l'affichage (212) du dispositif d'interface utilisateur (114) à afficher une interface utilisateur graphique (120) comportant l'ensemble de données de sortie (113) généré, et
dans lequel l'interface utilisateur graphique (120) comporte un plan d'action, sur la base des données de sortie générées, que l'équipe au sol doit suivre lors de la répartition d'un aéronef électrique spécifié (122).

2. Système (100) selon la revendication 1, dans lequel les données d'information de compagnie aérienne (302) comportent au moins un des éléments suivants :
un nombre d'aéronefs électriques (122) dans une flotte de la compagnie aérienne, une distance de vol pour l'aéronef électrique, une heure de départ pour l'aéronef électrique ou une heure d'arrivée pour l'aéronef électrique.

3. Système (100) selon la revendication 1 ou 2, dans lequel les données d'infrastructure aéroportuaire (300) comportent au moins un des éléments suivants :
un nombre de stations de recharge, une puissance de charge nominale au niveau d'une station de recharge, une durée nécessaire pour embarquer dans l'aéronef électrique (122), une durée nécessaire pour débarquer de l'aéronef électrique, une période de temps nécessaire pour remplacer une ou plusieurs batteries de l'aéronef électrique ou un nombre de batteries entièrement chargées en stock.

4. Système (100) selon la revendication 1, 2 ou 3, dans lequel les données de gestion de batterie (304) comportent au moins un des éléments suivants :
une charge minimale nécessaire pour effectuer une distance de vol pour l'aéronef électrique (122), un état de charge, une marge de sécurité de batterie, une période de temps pour la charge de batterie ou un nombre de batteries à bord de l'aéronef électrique.

5. Procédé (400), le procédé comportant :
la réception d'un ensemble de données d'entraînement ;
l'entraînement d'un algorithme d'apprentissage automatique d'un module de répartition de vol électrique (112) sur la base de l'ensemble de données d'entraînement reçu ;
la réception d'un ou de plusieurs ensembles de données en temps réel, les un ou plusieurs ensembles de données en temps réel comportant au moins l'une parmi des données d'infrastructure aéroportuaire (300), des données d'information de compagnie aérienne (302) ou des données de gestion de batterie (304) ;
la génération d'un ensemble de données de sortie (113) pour la répartition d'un aéronef électrique (122) à l'aide de l'algorithme d'apprentissage automatique entraîné du module de répartition de vol électrique sur la base des données en temps réel reçues ; et
générer un ou plusieurs signaux de commande configurés pour amener un affichage (212) d'un dispositif d'interface utilisateur (114) à afficher une interface utilisateur graphique (120) comportant l'ensemble de données de sortie (113) généré,
dans lequel l'interface utilisateur graphique (120) comporte un plan d'action, sur la base des données de sortie générées, que l'équipe au sol doit suivre lors de la répartition d'un aéronef électrique spécifié (122).

6. Procédé (400) selon la revendication 5, dans lequel les données d'information de compagnie aérienne (302) comportent au moins un des éléments suivants :
un nombre d'aéronefs électriques (122) dans une flotte de la compagnie aérienne, une distance de vol pour l'aéronef électrique, une heure de départ pour l'aéronef électrique ou une heure d'arrivée pour l'aéronef électrique.

7. Procédé (400) selon la revendication 5 ou 6, dans lequel les données d'infrastructure aéroportuaire (300) comportent au moins un des éléments suivants :
un nombre de stations de recharge, une puissance de charge nominale au niveau d'une station de recharge, une durée nécessaire pour embarquer dans l'aéronef électrique (122), une durée nécessaire pour débarquer de l'aéronef électrique, une période de temps nécessaire pour remplacer une ou plusieurs batteries de l'aéronef électrique ou un nombre de batteries entièrement chargées en stock.

8. Procédé (400) selon l'une quelconque des revendications 5, 6 ou 7, dans lequel les données de gestion de batterie (304) comportent au moins un des éléments suivants :
une charge minimale nécessaire pour effectuer une distance de vol pour l'aéronef électrique (122), un état de charge, une marge de sécurité de batterie, une période de temps pour la charge de batterie ou un nombre de batteries à bord de l'aéronef électrique.
